# EUROPÄISCHE PATENTANMELDUNG

(11) **EP 4 663 271 A2**
(43) Veröffentlichungstag der Anmeldung: **17.12.2025**
(21) Anmeldenummer: 25171165.1
(22) Anmeldetag: 17.04.2025
(51) Int. Cl.: B01D 53/04

(54) **VORRICHTUNG UND VERFAHREN ZUM EXTRAHIEREN VON CO2 AUS LUFT**

(30) Priorität: 24.05.2024 DE 102024114586; 18.07.2024 DE 102024120258
(71) Anmelder: Purem GmbH, 66539 Neunkirchen (DE)
(72) Erfinder: Wolf, Thomas, Esslingen (DE); Többen, Heike, Uhingen (DE)
(74) Vertreter: Ruttensperger Lachnit Trossin Gomoll

(57) **Zusammenfassung**

Eine Vorrichtung zum Extrahieren von CO₂ aus Luft umfasst wenigstens einen in einem Adsorptionsbetrieb von CO₂ enthaltender Luft (L) durchströmbaren Extraktionsreaktor (12, 14) mit einer Adsorptionsoberfläche (33), eine Heizanordnung (56) zum Erwärmen des wenigstens einen Extraktionsreaktors (12, 14) wenigstens im Bereich seiner Adsorptionsoberfläche (33) auf eine Temperatur über einer Extraktionsgas-Desorptionstemperatur in einem Heizbetrieb und wenigstens einen Extraktionsgas-Speicher (54) zum Speichern von in einem Desorptionsbetrieb von dem wenigstens einen Extraktionsreaktor (12, 14) desorbiertem CO₂.

## Beschreibung

Die vorliegende Erfindung betrifft eine Vorrichtung sowie ein Verfahren zum Extrahieren von CO₂ aus Luft.

Um einen den Klimawandel fördernden übermäßigen Anstieg des CO₂-Gehalts in der Erdatmosphäre zu verhindern, werden umfangreiche Maßnahmen zum Vermindern des CO₂-Ausstoßes getroffen. Diese Maßnahmen können jedoch nicht dazu beitragen, den bereits vorhandenen CO₂-Gehalt zu senken, also in der Erdatmosphäre bereits enthaltenes CO₂ wieder aus dieser zu entnehmen. Um dies zu erreichen, ist es beispielsweise bekannt, durch umfangreiche Aufforstungsmaßnahmen oder Renaturierungsmaßnahmen von Mooren natürliche Extraktionsgas-Speicher zu generieren.

Es ist die Aufgabe der vorliegenden Erfindung, eine Vorrichtung und ein Verfahren zum Extrahieren von CO₂ aus Luft vorzusehen, mit welchen bei einfacher technischer Realisierung zuverlässig und effizient die Entnahme von CO₂ aus Luft erreicht wird.

Gemäß einem ersten Aspekt der vorliegenden Erfindung wird diese Aufgabe gelöst durch eine Vorrichtung zum Extrahieren von CO₂ aus Luft, umfassend:
- wenigstens einen in einem Adsorptionsbetrieb von CO₂ enthaltender Luft durchströmbaren Extraktionsreaktor mit einer Adsorptionsoberfläche,
- eine Heizanordnung zum Erwärmen des wenigstens einen Extraktionsreaktors wenigstens im Bereich seiner Adsorptionsoberfläche auf eine Temperatur über einer Extraktionsgas-Desorptionstemperatur in einem Heizbetrieb,
- wenigstens einen Extraktionsgas-Speicher zum Speichern von in einem Desorptionsbetrieb von dem wenigstens einen Extraktionsreaktor desorbiertem CO₂.

Durch die alternierende Adsorption und Desorption von CO₂ in einem oder mehreren Extraktionsreaktoren und das Zuführen des desorbierten CO₂ als Extraktionsgas zu einem oder mehreren Extraktionsgas-Speichern kann in einem getakteten Betrieb CO₂ aus der Luft, also insbesondere auch der Erdatmosphäre, entnommen, gespeichert und gegebenenfalls in chemischen Prozessen oder direkt, beispielsweise als Schweißgas, weiter genutzt werden.

Es ist darauf hinzuweisen, dass die vorliegende Erfindung besonders vorteilhaft eingesetzt werden kann bei der Extraktion von CO₂ (Kohlendioxid) aus der Erdatmosphäre, also aus Luft. Die vorliegende Erfindung kann aber auch Anwendung finden in Verbindung mit anderen CO₂ enthaltenden Gasgemischen. Insofern ist Luft lediglich als Beispiel bzw. als Platzhalter für derartige CO₂ enthaltende Gasgemische zu betrachten. Alle nachfolgend dargelegten Erfindungsaspekte können gleichermaßen Anwendung finden bei Vorrichtungen bzw. Verfahren, mit welchen CO₂ als Extraktionsgas aus anderen CO₂ enthaltenden Gasgemischen als Luft extrahiert wird.

Ebenso ist CO₂ als Extraktionsgas nur als Beispiel bzw. Platzhalter für beliebige andere, jeweils in einem Gasgemisch enthaltene und aus diesem zu extrahierende Gase zu betrachten, die durch Adsorption aus dem Gasgemisch extrahiert und durch nachfolgende Desorption wieder freigesetzt und in einen entsprechenden Speicher geleitet werden können. Alle nachfolgend dargelegten Erfindungsaspekte können gleichermaßen Anwendung finden bei Vorrichtungen bzw. Verfahren, mit welchen andere Extraktionsgase als CO₂, beispielsweise Wasser bzw. Wasserdampf, aus Luft oder anderen diese enthaltenden Gasgemischen extrahiert werden.

Um den Prozess der Adsorption und Desorption effizient gestalten zu können, wird vorgeschlagen, dass der Extraktionsreaktor wenigstens ein Substrat mit einer Vielzahl von durchströmbaren Zellen oder Strömungskanälen in einer porösen Struktur umfasst, und dass das Substrat mit einer die Adsorptionsoberfläche bereitstellenden Adsorptionsbeschichtung beschichtet ist. Derartige Substrate sind beispielsweise aus der Abgasreinigung bei Brennkraftmaschinen bekannt und werden beispielsweise in Partikelfiltern bzw. in Katalysatoren eingesetzt. Sie können eine wabenartige bzw. poröse Struktur mit einer im Verhältnis zum beanspruchten Volumen sehr großen Oberfläche aufweisen, die von dem ein Extraktionsgas enthaltenden Gasgemisch umströmt und damit zur Adsorption genutzt werden kann.

Zur Behandlung großer Luftmengen wird vorgeschlagen, dass wenigstens ein, vorzugsweise jeder Extraktionsreaktor eine Extraktionseinheit mit einer Mehrzahl von parallel zueinander von Luft durchströmbaren, mit einer Adsorptionsbeschichtung beschichteten Substraten umfasst.

Beispielsweise kann das Substrat mit beispielsweise monolithisch ausgebildetem SiC aufgebaut sein. Alternativ kann zum Aufbau des Substrats verwendet werden:
- Cordierit, oder
- Metallmaterial, vorzugsweise Metallschaum oder metallische Wabenstruktur, oder
- Keramikmaterial, vorzugsweise Keramikschaum oder keramische Wabenstruktur.

Für eine effiziente Adsorption von CO₂ als Extraktionsgas kann die Adsorptionsbeschichtung mit Materialien wie Zeolith oder mit metallorganischem Material, wie z.B. MOF CALF-20, aufgebaut sein. Derartige Materialien bzw. metallorganische Gitterstrukturen bilden eine Beschichtung, welche eine hohe Selektivität, also ein ausgeprägtes Adsorptionsverhalten, gegenüber dem zu adsorbierenden Medium, also beispielsweise CO₂, aufweist.

Um für den Desorptionsbetrieb die Temperatur eines derartigen Extraktionsreaktors effizient auf eine über der Desorptionstemperatur beispielsweise von CO₂ liegende Temperatur beispielsweise von mehr als 50°C, vorzugsweise im Bereich von 100°C bis 150°C, bringen zu können, kann die Heizanordnung einen Heizgas-Kreislauf mit einer Heizgas-Förderanordnung zum Fördern von Heizgas durch den wenigstens einen Extraktionsreaktor und eine Heizgas-Heizvorrichtung zum Erwärmen des Heizgases auf eine Temperatur über der Extraktionsgas-Desorptionstemperatur umfassen. Durch das Hindurchleiten von Heizgas durch die offenzellige bzw. poröse Struktur eines Extraktionsreaktors wird gewährleistet, dass dieser zuverlässig im gesamten Bereich seiner Adsorptionsoberfläche auf die erforderliche Temperatur gebracht werden kann.

Zur Erwärmung des Heizgases kann die Heizgas-Heizvorrichtung wenigstens einen elektrisch erregbaren Heizgas-Heizer oder/und wenigstens einen von einem Wärmeträgermedium durchströmbaren Heizgas-Wärmetauscher umfassen. Der Einsatz eines derartigen von einem Wärmeträgermedium durchströmbaren Heizgas-Wärmetauschers ist daher besonders vorteilhaft, da das Wärmeträgermedium unter Einsatz regenerativer Energie, beispielsweise durch Solarthermie, Geothermie oder mit in einer Photovoltaikanlage erzeugtem Strom, erwärmt werden kann.

Insbesondere dann, wenn im Heizbetrieb ein Verlust von Heizgas auftritt, ist es vorteilhaft, wenn die Heizanordnung wenigstens einen Heizgas-Speicher zum Nachspeisen von Heizgas in den Heizgas-Kreislauf umfasst.

Bei einer besonders vorteilhaften Ausgestaltung ist das Heizgas CO₂, also das selbe Gas, wie das zu extrahierende Gas. Dies hat zur Folge, dass in einem auf den Heizbetrieb folgenden Desorptionsbetrieb bzw. bei der nachfolgenden Speicherung von desorbiertem CO₂ keine Separation des zu speichernden Gases CO₂ von dem mit diesem aus dem Extraktionsreaktor abgegebenen Heizgas erforderlich ist.

Ein weiterer Vorteil der Verwendung des zu extrahierenden bzw. extrahierten Gases, also beispielsweise CO₂, als Heizgas ist, dass der wenigstens eine Heizgas-Speicher aus dem wenigstens einen Extraktionsgas-Speicher mit dem Heizgas, beispielsweise CO₂, gespeist werden kann.

Zur effizienten Durchströmung mit dem Gasgemisch Luft kann wenigstens eine Gasgemisch-Förderanordnung zum Fördern von Luft durch den wenigstens einen Extraktionsreaktor im Adsorptionsbetrieb vorgesehen sein.

Um einerseits das Gasgemisch Luft und andererseits das desorbierte Extraktionsgas CO₂ oder/und Heizgas aus dem wenigstens einen Extraktionsreaktor abziehen zu können, kann wenigstens eine Extraktionsreaktor-Entleerpumpe zum Abpumpen von Luft, vorzugsweise zur Umgebung, aus dem wenigstens einen Extraktionsreaktor in einem Gasgemisch-Abpumpbetrieb oder/und zum Abpumpen von CO₂ aus dem wenigstens einen Extraktionsreaktor in den Extraktionsgas-Speichertank im Desorptionsbetrieb vorgesehen sein.

Um die für Temperaturerhöhung im Heizbetrieb eingesetzte Energie effizient nutzen zu können, wird vorgeschlagen, dass wenigstens eine Extraktionsgas-Wärmetauscheranordnung vorgesehen ist zur Übertragung von in dem im Desorptionsbetrieb zu dem wenigstens einen Extraktionsgas-Speicher geleiteten CO₂ transportierter Wärme auf ein Wärme aufnehmendes Medium.

Eine besonders effiziente Extraktion von CO₂ kann dadurch gewährleistet werden, eine Mehrzahl von Extraktionsreaktoren vorgesehen ist.

Um dabei auch bei dem die drei Betriebsphasen Adsorptionsbetrieb, Heizbetrieb und Desorptionsbetrieb umfassenden Betrieb eine nahezu kontinuierliche Extraktion erreichen zu können, wird vorgeschlagen, dass dann, wenn ein Teil der Extraktionsreaktoren im Desorptionsbetrieb zu betreiben ist, ein Teil der Extraktionsreaktoren im Adsorptionsbetrieb betreibbar ist oder/und ein Teil der Extraktionsreaktoren im Heizbetrieb betreibbar ist. Dies bedeutet, dass in den verschiedenen Extraktionsreaktoren zumindest zwei dieser Betriebsphasen gleichzeitig ablaufen können.

Vorteilhafterweise ist die Heizanordnung dazu ausgebildet, das Heizgas nur dem im Heizbetrieb betriebenen Teil der Extraktionsreaktoren zuzuführen.

Dabei kann für eine effiziente Wärmerückführung das Wärme aufnehmende Medium das dem im Heizbetrieb betriebenen Teil der Extraktionsreaktoren zugeführte Heizgas umfassen.

Gemäß einem weiteren Aspekt der vorliegenden Erfindung wird die eingangs angeführte Aufgabe gelöst durch ein Verfahren zum Extrahieren von CO₂ aus Luft, vorzugsweise vermittels einer erfindungsgemäßen Vorrichtung, umfassend die Maßnahmen:
a) in einem Adsorptionsbetrieb, Fördern von Luft durch wenigstens einen Extraktionsreaktor und Adsorbieren von CO₂ an einer Adsorptionsoberfläche des wenigstens einen Extraktionsreaktors,
b) in einem auf den Adsorptionsbetrieb folgenden Heizbetrieb, Erwärmen des wenigstens einen Extraktionsreaktors wenigstens im Bereich seiner Adsorptionsoberfläche auf eine über einer Extraktionsgas-Desorptionstemperatur liegende Temperatur,
c) in einem auf den Heizbetrieb folgenden Desorptionsbetrieb, Leiten von von dem wenigstens einen Extraktionsreaktor desorbiertem CO₂ zu wenigstens einem Extraktionsgas-Speicher.

Um zu gewährleisten, dass im Desorptionsbetrieb nur desorbiertes CO₂ zu dem wenigstens einen Extraktionsgas-Speicher geleitet wird, wird vorgeschlagen, dass nach Beenden des Adsorptionsbetriebs und vor Beginn des Heizbetriebs in einem Gasgemisch-Abpumpbetrieb in dem wenigstens einen Extraktionsreaktor enthaltene Luft als Restgasatmosphäre abgepumpt wird.

Zum Erreichen eines nahezu kontinuierlichen CO₂-Extraktionsvorgangs kann eine Mehrzahl von Extraktionsreaktoren verwendet werden, wobei dann, wenn ein Teil der Extraktionsreaktoren im Desorptionsbetrieb betrieben wird, ein Teil der Extraktionsreaktoren im Adsorptionsbetrieb betrieben wird oder/und ein Teil der Extraktionsreaktoren im Heizbetrieb betrieben wird.

Bei dem erfindungsgemäßen Verfahren kann zumindest ein Teil der im Heizbetrieb zum Erwärmen wenigstens eines Extraktionsreaktors eingesetzten Energie dadurch zurückgewonnen werden, dass dem von dem im Desorptionsbetrieb betriebenen Teil der Extraktionsreaktoren zu dem wenigstens einen Extraktionsgas-Speicher geleiteten CO₂ Wärme zur Erwärmung des im Heizbetrieb betriebenen Teils der Extraktionsreaktoren entzogen wird.

Die vorliegende Erfindung wird nachfolgend mit Bezug auf die beiliegenden Figuren detailliert beschrieben. Es zeigt:
- Fig. 1: eine prinzipartige Darstellung eine Vorrichtung zum Extrahieren von CO₂ aus Luft;
- Fig. 2: eine prinzipielle Schnittdarstellung eines Extraktionsreaktors der Vorrichtung der Fig. 1;
- Fig. 3: eine Querschnittansicht eines mit einer Adsorptionsbeschichtung überzogenen Substrats;
- Fig. 4: eine Querschnittansicht einer Extraktionseinheit mit einer Mehrzahl von mit einer Adsorptionsbeschichtung überzogenen Substraten;
- Fig. 5: eine der Fig. 4 entsprechende Querschnittansicht einer Extraktionseinheit einer alternativen Ausgestaltungsart;

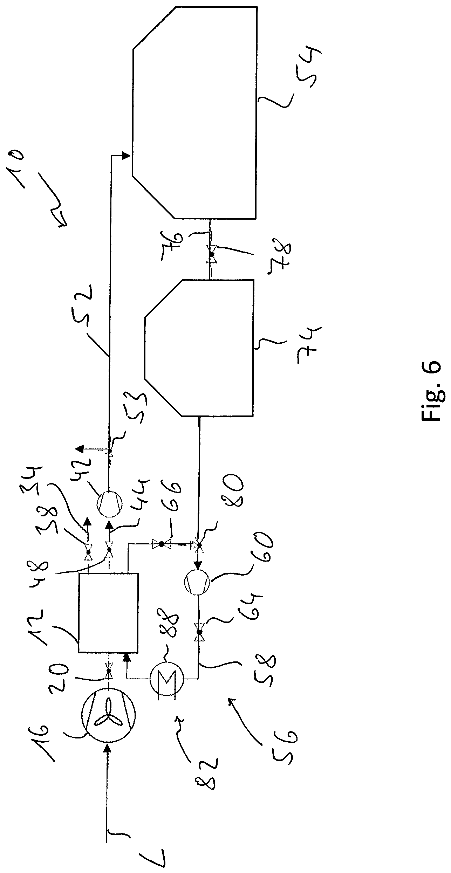

- Fig. 6: eine der Fig. 1 entsprechende prinzipartige Darstellung einer alternativen Ausgestaltung einer Vorrichtung zum Extrahieren von CO₂ aus Luft.

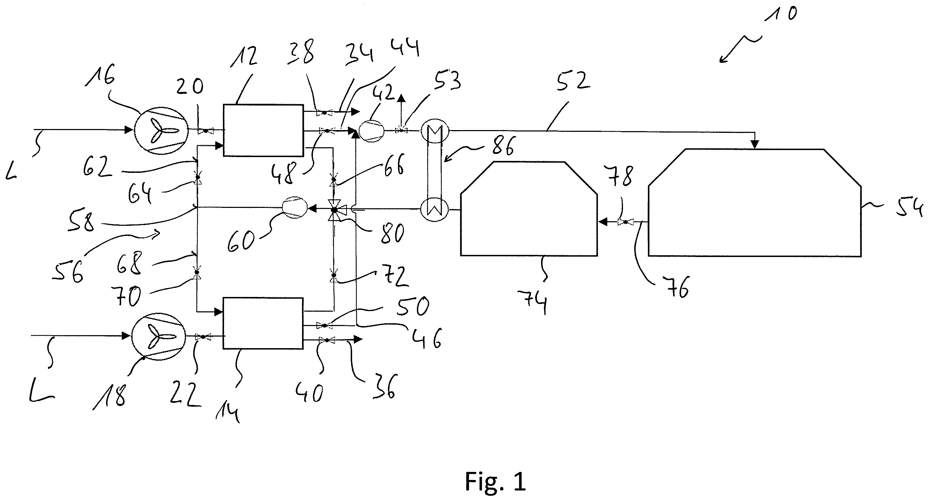

Mit Bezug auf die Fig. 1 bis 5 wird nachfolgend ein erstes Ausgestaltungsbeispiel einer Vorrichtung 10 zum Extrahieren von CO₂ beschrieben. Die DAC-(Direct Air Capture)-Vorrichtung 10 umfasst als wesentlichen Bestandteil zwei Extraktionsreaktoren 12, 14, welchen über eine diesen jeweils zugeordnete und beispielsweise als Gebläse oder Kompressor oder dergleichen ausgebildete Gasgemisch-Förderanordnung 16, 18 Luft L zugeführt werden kann. Im Strömungsweg von einer jeweiligen Gasgemisch-Förderanordnung 16, 18 zum zugeordneten Extraktionsreaktor 12, 14 ist jeweils ein Absperrventil 20, 22 angeordnet, durch welches der Luftströmungsweg in den jeweiligen Extraktionsreaktor 12, 14 freigegeben bzw. abgesperrt werden kann.

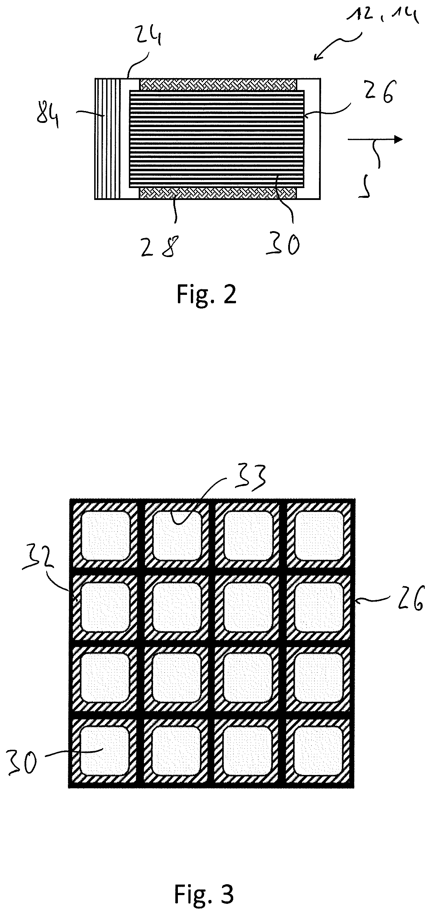

Die Fig. 2 zeigt in prinzipartiger Darstellung ein Ausgestaltungsbeispiel eines derartigen Extraktionsreaktors 12, 14. Dieser umfasst ein beispielsweise rohrartiges Gehäuse 24, in welchem ein Substrat 26 beispielsweise durch faserartiges Lagermaterial 28 getragen ist. Das Substrat 26 weist eine Vielzahl von im Wesentlichen in einer Luftströmungsrichtung S sich erstreckenden Strömungskanälen bzw. Zellen 30 auf, durch welche die vermittels der jeweiligen Gasgemisch-Förderanordnung 16, 18 geförderte Luft L in der Luftströmungsrichtung S hindurchströmen kann. Derartige beispielsweise mit keramischem oder metallischem Material, beispielsweise SiC (Siliciumcarbid) oder Cordierit, aufgebaute Substrate sind beispielsweise aus dem Aufbau von Abgasreinigungsanlagen, also Partikelfiltern bzw. Katalysatoren, bei Abgasanlagen von Brennkraftmaschinen bekannt. Bei einer alternativen Ausgestaltungsart kann das Substrat 26 mit Metallmaterial oder Keramikmaterial, beispielsweise als metallische oder mit Keramikmaterial aufgebaute Wabenstruktur oder als offenzelliger Metallschaum oder Keramikschaum, der eine Vielzahl von durchströmbaren Strömungskanälen bereitstellt, aufgebaut sein.

Die in dem Substrat 26 gebildeten Zellen 30 stellen, wie dies anhand des in Fig. 3 veranschaulichten beispielhaften Querschnitts des Substrats 26 veranschaulicht ist, eine vergleichsweise große Oberfläche bereit, an welcher die das Substrat 26 durchströmende Luft in Kontakt mit dem Substrat 26 bzw. einer daran vorgesehenen Adsorptionsbeschichtung 32 kommen kann. Die Adsorptionsbeschichtung 32 stellt eine mit der Luft L in Kontakt tretende Adsorptionsoberfläche 33 bereit. Beispielsweise kann ein derartiges Substrat mit einer Zellendichte von 40 cpsi (Zellen pro Quadratzoll) bis 750 cpsi aufgebaut sein und kann bei beispielsweise kreisrunder Außenumfangskontur einen Durchmesser von bis zu 13 Zoll, also 32 cm bis 33 cm, aufweisen. Bei einer Ausgestaltung mit beispielsweise quadratischer Querschnittsgeometrie kann das Substrat eine Kantenlänge von beispielsweise 10 cm bis 30 cm aufweisen.

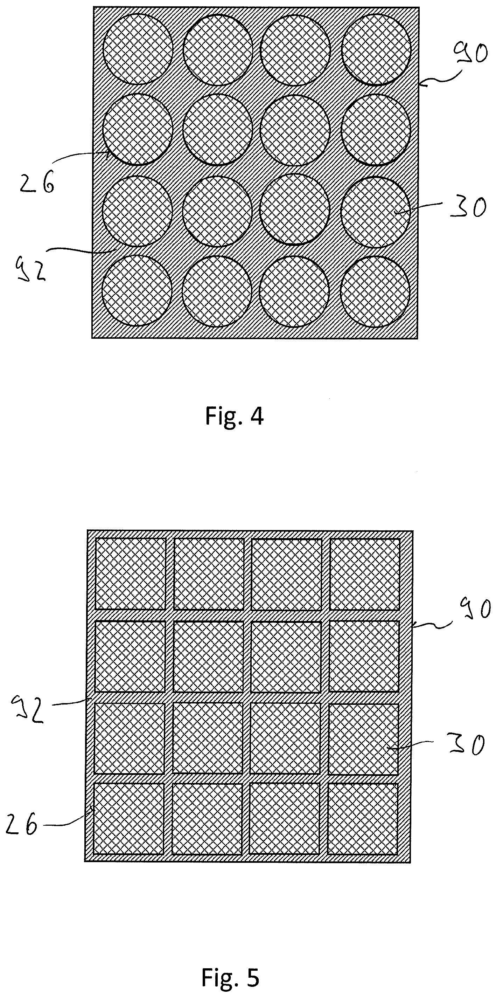

Die Fig. 4 und 5 zeigen verschiedene Ausgestaltungsarten von jeweils eine Mehrzahl der mit einer Adsorptionsbeschichtung 32 beschichteten Substrate 26 umfassenden Extraktionseinheiten 90. Jede Extraktionseinheit 90 umfasst eine Trägerstruktur 92, in welcher eine Vielzahl der Substrate 26 getragen ist. Die beispielsweise mit Kunststoffmaterial oder Metallmaterial aufgebaute Trägerstruktur 92 kann für Gas undurchströmbar sein, so dass das gesamte in einen jeweiligen Extraktionsreaktor 12,14 eingeleitete Gasgemisch durch die Zellen 30 bzw. die Strömungskanäle der Substrate 26 strömt.

Bei der in Fig. 4 dargestellten Ausgestaltungsart der Extraktionseinheit 90 sind die Substrate 26 mit kreisrundem Querschnitt ausgebildet und in einem quadratischen Muster angeordnet, so dass sich zueinander parallele Reihen und Zeilen von zueinander im Wesentlichen nicht versetzt angeordneten Substraten 26 ergeben. Bei einer zu einer höheren Dichte der Substrate 26 beitragenden Struktur können die Substrate 26 benachbarter Zeilen bzw. Reihen zueinander versetzt sein, so dass eine Anordnung nach Art einer dichtesten Kugelpackung entsteht.

Die Fig. 5 zeigt eine Anordnung von Substraten 26 mit quadratischem Querschnitt in der Extraktionseinheit 90. Auch hier sind die Substrate 26 zueinander in quadratischem Muster angeordneten, so dass sich zueinander parallele Zeilen und Reihen von zueinander im Wesentlichen nicht versetzt angeordneten Substraten 26 ergeben.

Grundsätzlich können die Substrate 26 auch andere Querschnittsgeometrien, beispielsweise eine 6-eckige oder 8-eckige Querschnittsgeometrie, aufweisen, um diese in einer derartigen Extraktionseinheit 90 möglichst dicht anordnen zu können.

Durch die Verwendung der Extraktionseinheiten 90 in den Extraktionsreaktoren 12, 14 wird es möglich, bei derartigen im Allgemeinen stationär betriebenen DAC-Vorrichtungen große Volumenströme des Gasgemisches, also beispielsweise Luft, durch die Extraktionsreaktoren 12, 14 zu leiten und somit auch entsprechend große Oberflächen zur Behandlung des Gasgemisches bzw. zum Extrahieren des Extraktionsgases, also beispielsweise CO₂, bereitzustellen.

Die Adsorptionsbeschichtung 32 kann beispielsweise mit Zeolith oder metallorganischem Material bzw. einer metallorganischen Gitterstruktur, wie zum Beispiel MOF CALF-20, ausgebildet sein, also einem Material, das hinsichtlich des zu adsorbierenden Gases CO₂ eine hohe Selektivität aufweist.

In einem Adsorptionsbetrieb wird die Luft L, also beispielsweise der Erdatmosphäre entnommene Umgebungsluft, vermittels der Gasgemisch-Förderanordnungen 16, 18 bei jeweils geöffnetem Absperrventil 20, 22 in den jeweils zugeordneten Extraktionsreaktor 12, 14 geleitet. In der Luft L enthaltenes CO₂ wird beim Strömen durch die Zellen 30 des Substrats 26 an der durch die Adsorptionsbeschichtung 32 bereitgestellten Adsorptionsoberfläche 33 adsorbiert, so dass über eine jeweilige Gasgemisch-Abgabeleitung 34, 36 CO₂-entreicherte, idealerweise kein CO₂ mehr enthaltende Luft L wieder zur Umgebung abgegeben werden kann.

In Zuordnung zu jeder Gasgemisch-Abgabeleitung 34, 36 ist ein Absperrventil 38, 40 vorgesehen, welches im Adsorptionsbetrieb die Abgabe von Luft L zur Umgebung zulässt, grundsätzlich aber in Verbindung mit dem jeweils stromaufwärts des Extraktionsreaktors 12, 14 angeordneten Absperrventil 20, 22 den Extraktionsreaktor 12, 14 gegen Durchströmung mit Luft vollständig absperren kann.

Die Vorrichtung 10 umfasst ferner eine Extraktionsreaktor-Entleerpumpe 42, welche über eine jeweilige Entleerleitung 44, 46 in Verbindung mit den Extraktionsreaktoren 12, 14 steht. In jeder Entleerleitung 44, 46 ist ein weiteres Absperrventil 48, 50 angeordnet, durch welches die jeweils zugeordnete Entleerleitung 44, 46 zum Absaugen von im jeweiligen Extraktionsreaktor 12, 14 noch enthaltener Luft L bei jeweils geschlossenem Absperrventil 20, 22 freigegeben oder abgesperrt werden kann. Anschließend an einen Adsorptionsbetrieb kann bei in die Absperrstellung gestellten Absperrventilen 20, 22, 38, 40 und in die Freigabestellung gestellten Absperrventilen 48, 50 in dem Extraktionsreaktoren 12, 14 noch enthaltene Luft L in einem Gasgemisch-Abpumpbetrieb abgepumpt werden, so dass in den Extraktionsreaktoren 12, 14 ein Unterdruck erzeugt wird. Die in diesem Gasgemisch-Abpumpbetrieb aus den Extraktionsreaktoren 12, 14 abgepumpte Luft L kann über eine Abgabeleitung 52 und ein darin angeordnetes Wegeventil 53 zur Umgebung abgegeben werden.

Die Abgabeleitung 52 führt zu einem Extraktionsgas-Speicher 54, in welchem in einem nachfolgend beschriebenen Desorptionsbetrieb vermittels der Extraktionsreaktor-Entleerpumpe 42 aus den Extraktionsreaktoren 12, 14 abgepumptes CO₂ unter einem Druck von beispielsweise bis zu 50 bar und bei Umgebungstemperatur gespeichert werden kann. Im Desorptionsbetrieb, also beim Fördern von CO₂ von den Extraktionsreaktoren 12, 14 in dem Extraktionsgas-Speicher 54, ist das Wegeventil 53 so gestellt, dass der Strömungsweg von der Extraktionsreaktor-Entleerpumpe 42 zum Extraktionsgas-Speicher 54 freigegeben ist und kein CO₂ zur Umgebung ausgestoßen wird.

Die Vorrichtung 10 umfasst ferner eine allgemein mit 56 bezeichnete Heizanordnung. Vermittels der Heizanordnung 56 werden in einem Heizbetrieb die Extraktionsreaktoren 12, 14 bzw. das darin jeweils enthaltene Substrat 26 mit der Adsorptionsbeschichtung 32 auf eine Temperatur über einer Desorptionstemperatur des CO₂ erwärmt. Beispielsweise kann eine Erwärmung auf eine Temperatur von mehr als 50°C, vorzugsweise im Bereich von 100°C bis 150°C, erfolgen, um eine im Wesentlichen vollständige und schnelle Desorption von CO₂ zu erreichen.

Die Heizanordnung 56 umfasst einen Heizgas-Kreislauf 58, in welchem, gefördert durch eine als Gebläse, Kompressor oder dergleichen ausgebildete Heizgas-Förderanordnung 60, ein Heizgas durch die Zellen 30 der in den Extraktionsreaktoren 12, 14 enthaltenen Substrate 26 gefördert wird. Der Heizgas-Kreislauf 58 umfasst in Zuordnung zu dem Extraktionsreaktor 12 einen ersten Teilkreislauf 62, in welchem stromaufwärts und stromabwärts des Extraktionsreaktors 12 bzw. der Heizgas-Förderanordnung 60 jeweils ein Absperrventil 64, 66 vorgesehen ist. Ferner umfasst der Heizgas-Kreislauf 58 in Zuordnung zu dem Extraktionsreaktor 14 einen zweiten Teilkreislauf 68, in welchem stromaufwärts und stromabwärts des Extraktionsreaktors 14 bzw. der Heizgas-Förderanordnung 60 jeweils ein Absperrventil 70, 72 vorgesehen ist.

Bei in die Freigabestellung gestellten Absperrventilen 64, 66 und in die Absperrstellung gestellten Absperrventilen 70, 72 strömt das durch die Heizgas-Förderanordnung 60 geförderte Heizgas in den ersten Teilkreislauf 62 und damit durch den Extraktionsreaktor 12. Bei in die Freigabestellung gestellten Absperrventilen 70, 72 und in die Absperrstellung gestellten Absperrventilen 64, 66 strömt das durch die Heizgas-Förderanordnung 60 geförderte Heizgas durch den Extraktionsreaktor 14.

Die Heizanordnung 56 umfasst ferner einen Heizgas-Speicher 74. Bei der in Fig. 1 dargestellten Vorrichtung wird als Heizgas CO₂ verwendet, so dass der Heizgas-Speicher 74 vorteilhafterweise über eine Speiseleitung 76 aus dem Extraktionsgas-Speicher 54 gespeist werden kann. Zum Nachspeisen von CO₂ in den Heizgas-Speicher 74 kann ein in der Speiseleitung 76 vorgesehenes Absperrventil 78 in seine Freigabestellung gebracht werden, so dass unter Überdruck stehendes CO₂ aus dem Extraktionsgas-Speicher 54 in den Heizgas-Speicher 74 strömt. Um das Nachspeisen von CO₂ in den Heizgas-Speicher 74 zu unterbinden, wird das Absperrventil 78 in seine Absperrstellung gestellt.

Zum Einleiten des Heizgases, also CO₂, in den Heizgas-Kreislauf 58, ist stromaufwärts der Heizgas-Förderanordnung 60 ein Wegeventil 80 vorgesehen. Dieses kann abhängig davon, durch welchen Extraktionsreaktor 12 bzw. 14 das Heizgas geleitet werden soll, entweder so gestellt werden, dass über das in seine Freigabestellung gestellte Absperrventil 66 oder über das in seine Freigabestellung gestellte Absperrventil 72 aus dem Extraktionsreaktor 12 oder dem Extraktionsreaktor 14 ausströmendes Heizgas zur Heizgas-Förderanordnung 60 zurückströmen kann. Zusätzlich kann durch das Wegeventil 80 eine Strömungsverbindung zwischen dem Heizgas-Speicher 74 und der Heizgas-Förderanordnung 60 hergestellt werden, so dass dem aus einem jeweiligen Extraktionsreaktor 12 abgegebenen Heizgas auch aus dem Heizgas-Speicher 74 abgegebenes Heizgas beigemischt, also in den Heizgas-Kreislauf 58 eingeleitet werden kann. Insbesondere am Beginn des Heizbetriebs kann zum vollständigen Befüllen des Heizgas-Kreislaufs 58 bzw. des jeweils aktiven Teilkreislaufs 62, 68 das Wegeventil 80 so gestellt werden, dass Heizgas, also CO₂, aus dem Heizgas-Speicher 74 in den Heizgas-Kreislauf 58 eingeleitet wird. Grundsätzlich kann durch das Wegeventil 80 die Verbindung zwischen dem Heizgas-Speicher 74 und dem Heizgas-Kreislauf 58 auch unterbunden werden, so dass der Heizgas-Kreislauf 58 bzw. die beiden Teilkreisläufe 62, 68 desselben abgeschlossene Kreisläufe bilden.

Der Betrieb der Vorrichtung 10 zum Extrahieren von CO₂ aus Luft mit den teilweise bereits angesprochenen verschiedenen Betriebsarten bzw. Betriebsphasen wird nachfolgend beschrieben.

Bei der Vorrichtung 10 können die beiden Extraktionsreaktoren 12, 14 jeweils wechselweise im Adsorptionsbetrieb bzw. im Heizbetrieb bzw. im Desorptionsbetrieb betrieben werden, so dass über die Zeit hinweg eine im Wesentlichen kontinuierliche Extraktion von CO₂ aus der Luft L erfolgen kann. Bei Betreiben des Extraktionsreaktors 12 im Adsorptionsbetrieb sind dessen Absperrventile 20, 38 in ihre Freigabestellung gestellt, während die in Zuordnung zum Extraktionsreaktor 12 vorgesehenen Absperrventile 64, 66 des ersten Teilkreislaufs 62 in ihre Absperrstellung gestellt sind. Im Adsorptionsbetrieb des Extraktionsreaktors 12 strömt die durch die Gasgemisch-Förderanordnung 16 in diesen eingeleitete Luft durch die Zellen 30 des Substrats 26 des Extraktionsreaktors 12 hindurch, wobei in der Luft L enthaltenes CO₂ an der Oberfläche des CO₂-Adsorptionsmaterials 32 adsorbiert wird.

Während der Extraktionsreaktor 12 im Adsorptionsbetrieb betrieben wird, wird der Extraktionsreaktor 14 im Heizbetrieb bzw. im Desorptionsbetrieb betrieben. Dazu wird zunächst im Heizbetrieb bei dem zuvor im Adsorptionsbetrieb betriebenen Extraktionsreaktor 14 das Heizgas über den zweiten Teilkreislauf 68 bei in ihre Freigabestellung gestellten Absperrventilen 70, 72 durch die Zellen 30 des Substrats 26 des Extraktionsreaktors 14 geleitet. Da in diesem Zustand als Heizgas reines CO₂ verwendet wird, kann eine weitere Adsorption von CO₂ am CO₂-Adsorptionsmaterial 32 des Extraktionsreaktors 14 auftreten. Um diese Adsorption von CO₂ zu kompensieren, kann durch entsprechende Ansteuerung des Wegeventils 80 aus dem Heizgas-Speicher 74 CO₂ in den Heizgas-Kreislauf 58 nachgespeist werden.

Um vermittels des im Heizgas-Kreislauf 58 zirkulierenden Heizgases tatsächlich eine Erwärmung des Extraktionsreaktors 14 bzw. des mit dem CO₂-Adsorptionsmaterial 32 beschichteten Substrats 26 desselben zu erreichen, umfasst die Heizanordnung 56 in Zuordnung zu jedem der beiden Extraktionsreaktoren 12, 14 eine in Fig. 2 erkennbare Heizgas-Heizvorrichtung 82. In dem in Fig. 2 dargestellten Ausgestaltungsbeispiel umfasst die Heizgas-Heizvorrichtung 82 einen elektrisch erregbaren Heizgas-Heizer 84. Dieser kann einen beispielsweise spiralartig oder mäanderartig gewundenen Heizleiter aufweisen, der durch Anlegen einer elektrischen Spannung erwärmt wird. Das durch die Heizgas-Förderanordnung 60 geförderte Heizgas durchströmt beim Einströmen in einen jeweiligen Extraktionsreaktor 12 bzw. 14 den unmittelbar vor, also stromaufwärts des Substrats 26 angeordneten Heizgas-Heizer 84, nimmt dabei Wärme auf und transportiert diese Wärme zum Substrat 26. Da der Heizgas-Heizer 84 unmittelbar vor dem Substrat 26 angeordnet ist, ist gewährleistet, dass das Heizgas die Zellen 30 des Substrats 26 im Wesentlichen mit der gleichen Temperatur durchströmt, die dieses beim Verlassen des Heizgas-Heizers 84 hat, so dass eine effiziente Erwärmung des Substrats 26 bzw. der Adsorptionsbeschichtung 32 erreicht werden kann.

Ist eine die Desorption von CO₂ gewährleistende Temperatur des Substrats 26 bzw. der Adsorptionsbeschichtung 32 erreicht, wird das Fördern von Heizgas, also CO₂, durch den zunächst im Heizbetrieb betriebenen Extraktionsreaktor 14 hindurch eingestellt. Die Absperrventile 70, 72 werden in ihre Absperrstellung gebracht, und das Wegeventil 80 wird in seine den Heizgas-Speicher 74 abkoppelnde Stellung gebracht. Nachfolgend wird dann für den Desorptionsbetrieb des Extraktionsreaktors 14 das in der Entleerleitung 46 vorgesehene Absperrventil 50 in seine Freigabestellung gebracht und die Extraktionsreaktor-Entleerpumpe 42 wird in Betrieb gesetzt, so dass im Extraktionsreaktor 14 noch enthaltenes Heizgas und desorbiertes CO₂ über die Entleerleitung 46 und die Abgabeleitung 52 in den Extraktionsgas-Speicher 54 gefördert wird. In diesem Zustand sind die dem Extraktionsreaktor 14 zugeordneten Absperrventile 22, 40, 70, 72 in ihrer Absperrstellung, so dass weder Luft L, noch Heizgas in den Extraktionsreaktor 14 einströmen kann.

Bereits vor dem Beginn des Desorptionsbetriebs bei dem Extraktionsreaktor 14 kann bei dem zunächst im Adsorptionsbetrieb betriebenen Extraktionsreaktor 12 der Adsorptionsbetrieb beendet werden bzw. in den Gasgemisch-Abpumpbetrieb übergegangen werden, bei welchem bei in ihre Absperrstellung gestellten Absperrventilen 20, 38, 64, 66 vermittels der Extraktionsreaktor-Entleerpumpe 42 die im Extraktionsreaktor 12 noch enthaltene Luft abgepumpt und über das Wegeventil 53 zur Umgebung gefördert wird. Da die Extraktionsreaktor-Entleerpumpe 42 beiden Extraktionsreaktoren 12, 14 zugeordnet ist und diese sowohl zum Abpumpen von Luft, als auch zum Abpumpen von desorbiertem CO₂ genutzt wird, ist es vorteilhaft bzw. erforderlich, den Gasgemisch-Abpumpbetrieb zum Abpumpen von Luft L aus einem der beiden CO₂ Extraktionsreaktoren 12, 14 durchzuführen, bevor im anderem Extraktionsreaktor 12, 14 im Desorptionsbetrieb desorbiertes CO₂ vermittels der Extraktionsreaktor-Entleerpumpe 42 in Richtung zum Extraktionsgas-Speicher 54 gefördert wird. Um diese Betriebsphasen an den beiden Extraktionsreaktoren 12, 14 auch mit zeitlichem Überlapp durchführen zu können, kann beispielsweise in Zuordnung zu jedem der beiden Extraktionsreaktoren 12, 14 eine eigenständig betreibbare Extraktionsreaktor-Entleerpumpe vorgesehen sein.

Ist bei dem CO₂-Extraktionsreaktor 12 am bzw. nach dem Ende des Adsorptionsbetriebs der Gasgemisch-Abpumpbetrieb beendet, wird dessen Absperrventil 48 in die Absperrstellung gebracht, und der Desorptionsbetrieb des Extraktionsreaktors 14 kann mit dem Öffnen des Absperrventils 50 begonnen werden. Da das Substrat 26 des Extraktionsreaktors 14 im vorangehenden Heizbetrieb auf eine ausreichend hohe Temperatur gebracht worden ist und auch eine vergleichsweise große Wärmespeicherkapazität aufweist, kann dafür gesorgt werden, dass im Desorptionsbetrieb im Wesentlichen das ganze an dem Adsorptionsmaterial des Extraktionsreaktors 14 adsorbierte CO₂ desorbiert und aus dem Extraktionsreaktor 14 abgegeben wird.

Während der Extraktionsreaktor 14 im Desorptionsbetrieb betrieben wird, kann bei dem Extraktionsreaktor 12 durch Öffnen der Absperrventile 64, 66 und Inbetriebsetzen der Heizgas-Förderanordnung 60 der Heizbetrieb begonnen bzw. durchgeführt werden, um, so wie vorangehend auch mit Bezug auf den Extraktionsreaktor 14 beschrieben, den Extraktionsreaktor 12 auf eine ausreichend hohe Temperatur zur nachfolgenden Desorption des darin adsorbierten CO₂ zu bringen. Während des Heizbetriebs des Extraktionsreaktors 12 kann der Desorptionsbetrieb des Extraktionsreaktors 14 mit dem Schließen des Absperrventils 50 und auch dem Deaktivieren der Extraktionsreaktor-Entleerpumpe 42 beendet werden. Bei dem Extraktionsreaktor 14 kann dann wieder der Adsorptionsbetrieb durch Öffnen der Absperrventile 22, 40 und Inbetriebsetzen der Gasgemisch-Förderanordnung 18 und damit Einleiten eines ein Extraktionsgas-enthaltenden Gasgemisches in den Extraktionsreaktor 14 gestartet werden.

Um bei diesem wechselweisen Betreiben der beiden Extraktionsreaktoren 12, 14 möglichst effizient arbeiten zu können, umfasst die Heizanordnung 58 einen allgemein mit 82 bezeichneten Extraktionsgas-Wärmetauscher. Dieser ist dazu ausgebildet, Wärme von dem über die Abgabeleitung 52 in den Extraktionsgas-Speicher 54 geförderten Extraktionsgas CO₂ auf das als Heizgas aus dem Heizgas-Speicher 74 in den Heizgas-Kreislauf 58 eingeleitete CO₂ zu übertragen. Dadurch wird das den jeweiligen Extraktionsreaktor 12, 14 mit vergleichsweise hoher Temperatur verlassende CO₂ gekühlt, was dessen Speicherung im Extraktionsgas-Speicher 54 begünstigt, und die dabei abgegebene Wärme kann auf das somit bereits vorgewärmt in den Heizgas-Kreislauf 58 eingeleitete Heizgas CO₂ übertragen werden.

Aus diesem Grunde ist es besonders vorteilhaft, in dem wechselweisen Betrieb der beiden Extraktionsreaktoren 12, 14 einen der beiden Extraktionsreaktoren 12, 14 im Heizbetrieb zu betreiben, während der andere der beiden Extraktionsreaktoren 12, 14 im Desorptionsbetrieb betrieben wird. Nur in diesen beiden Betriebsarten wird einerseits das Desorptionsgas CO₂ mit vergleichsweise hoher Temperatur aus einem der beiden Extraktionsreaktoren abgeben, und wird andererseits CO₂ als Heizgas näherungsweise mit Umgebungstemperatur aus dem Heizgasspeicher 74 abgegeben und in Richtung zu dem Heizgas-Kreislauf 58 geleitet.

Eine alternative Ausgestaltungsart der Vorrichtung 10 zum Extrahieren von CO₂ aus Luft ist in Fig. 5 dargestellt. Diese Vorrichtung 10 kann grundsätzlich so aufgebaut sein, wie die vorangehend mit Bezug auf die Fig. 1 beschriebene Vorrichtung 10. Beispielhaft kann die Vorrichtung 10 der Fig. 5 aber auch nur einen einzigen Extraktionsreaktor 12 mit den in diesem zugeordneten Systembereichen umfassen.

Bei der in Fig. 5 dargestellten Ausgestaltungsart der Vorrichtung 10 umfasst die Heizanordnung 56 als Heizgas-Heizvorrichtung 82 einen Heizgas-Wärmetauscher 88. Dieser ist in den Heizgas-Kreislauf 58 integriert und überträgt die in einem Heizmedium transportierte Wärme auf das im Heizgas-Kreislauf 58 strömende bzw. zirkulierende Heizgas, also beispielsweise CO₂. Das Heizmedium kann ein flüssiges oder gasförmiges Medium sein, das an einer externen Wärmequelle beispielsweise auch durch Solarthermie oder dergleichen Wärme aufnimmt und im Heizgas-Wärmetauscher 88 auf das Heizgas überträgt.

Es ist selbstverständlich, dass eine derartige Ausgestaltung der Heizgas-Heizvorrichtung 82 auch bei der in Fig. 1 dargestellten Vorrichtung 10 vorgesehen sein kann, welche mehrere parallel bzw. wechselweise arbeitende Extraktionsreaktoren 12, 14 aufweist.

Die verschiedenen Betriebsarten Adsorptionsbetrieb, Desorptionsbetrieb, Heizbetrieb bzw. Abpumpbetrieb können jeweils über diesen zugeordnete fest vorgegebene Zeitdauern vorzugsweise aufeinander abgestimmt durchgeführt werden. Alternativ oder zusätzlich ist es möglich, durch das Bereitstellen geeigneter Sensoren das Vorliegen definierter Zustände, wie zum Beispiel das Erreichen einer ausreichend hohen Temperatur für die Desorption oder einer bestimmten Gaskonzentration oder dergleichen, zu erfassen und dann, wenn ein derartiger Zustand vorliegt, von einer Betriebsphase in die nächste Betriebsphase überzugehen.

Es ist darauf hinzuweisen, dass bei einer Ausgestaltung der Vorrichtung 10 mit mehreren Extraktionsreaktoren mehr als zwei derartige Reaktoren vorgesehen sein können, die dann wechselweise in den verschiedenen Betriebsarten betrieben werden können. Beispielsweise kann ein erster Teil dieser Extraktionsreaktoren im Adsorptionsbetrieb betrieben werden, während ein zweiter Teil im Heizbetrieb betrieben wird und ein dritter Teil im Desorptionsbetrieb betrieben wird. Diese drei in jedem der Extraktionsreaktoren aufeinanderfolgend durchzuführenden Betriebsphasen können dann bei den einzelnen Extraktionsreaktoren durchgewechselt werden, so dass immer zumindest ein Extraktionsreaktor im Desorptionsbetrieb arbeitet und damit auch mit dem in Richtung zum Extraktionsgas-Speicher geförderten CO₂ eine Wärmequelle für die Erwärmung des Heizgases für zumindest einen gleichzeitig im Heizbetrieb betriebenen Extraktionsreaktor bereitstellt.

Bei Ausgestaltung der Vorrichtung 10 mit mehreren Extraktionsreaktoren können diese grundsätzlich auch synchron, also in der jeweils gleichen Betriebsart betrieben werden, wodurch es möglich wird, die Vorrichtung durch eine Verringerung der Anzahl an erforderlichen Pumpen, Gebläsen, Absperrventilen und dergleichen einfach auszugestalten.

## Patentansprüche

1. Vorrichtung zum Extrahieren von CO₂ aus Luft, umfassend:
- wenigstens einen in einem Adsorptionsbetrieb von CO₂ enthaltender Luft (L) durchströmbaren Extraktionsreaktor (12, 14) mit einer Adsorptionsoberfläche (33),
- eine Heizanordnung (56) zum Erwärmen des wenigstens einen Extraktionsreaktors (12, 14) wenigstens im Bereich seiner Adsorptionsoberfläche (33) auf eine Temperatur über einer Extraktionsgas-Desorptionstemperatur in einem Heizbetrieb,
- wenigstens einen Extraktionsgas-Speicher (54) zum Speichern von in einem Desorptionsbetrieb von dem wenigstens einen Extraktionsreaktor (12, 14) desorbiertem CO₂.

2. Vorrichtung nach Anspruch 1,
**dadurch gekennzeichnet,**
**dass** der Extraktionsreaktor (12, 14) wenigstens ein Substrat (26) mit einer Vielzahl von durchströmbaren Zellen (30) oder Strömungskanälen einer porösen Struktur umfasst, und dass das Substrat (26) mit einer die Adsorptionsoberfläche (33) bereitstellenden Adsorptionsbeschichtung (32) beschichtet ist, oder/und
**dass** wenigstens ein, vorzugsweise jeder Extraktionsreaktor (12, 14) eine Extraktionseinheit (90) mit einer Mehrzahl von parallel zueinander von Luft durchströmbaren, mit einer Adsorptionsbeschichtung (32) beschichteten Substraten (26) umfasst.

3. Vorrichtung nach Anspruch 2,
**dadurch gekennzeichnet,**
**dass** das Substrat aufgebaut ist mit:
- SiC, oder
- Cordierit, oder
- Metallmaterial, vorzugsweise Metallschaum oder metallische Wabenstruktur, oder
- Keramikmaterial, vorzugsweise Keramikschaum oder keramische Wabenstruktur,
oder/und
**dass** die Adsorptionsbeschichtung (32) aufgebaut ist mit:
- Zeolith, oder
- metallorganischem Material.

4. Vorrichtung nach einem der Ansprüche 1-3,
**dadurch gekennzeichnet, dass** die Heizanordnung (56) einen Heizgas-Kreislauf (58) mit einer Heizgas-Förderanordnung (60) zum Fördern von Heizgas durch den wenigstens einen Extraktionsreaktor (12, 14) und eine Heizgas-Heizvorrichtung (82) zum Erwärmen des Heizgases auf eine Temperatur über der Extraktionsgas-Desorptionstemperatur umfasst,
vorzugsweise wobei die Heizgas-Heizvorrichtung (82) wenigstens einen elektrisch erregbaren Heizgas-Heizer (84) oder/und wenigstens einen von einem Wärmeträgermedium durchströmbaren Heizgas-Wärmetauscher (88) umfasst.

5. Vorrichtung nach Anspruch 4,
**dadurch gekennzeichnet,**
**dass** die Heizanordnung (56) wenigstens einen Heizgas-Speicher (74) umfasst,
oder/und
**dass** das Heizgas CO₂ ist.

6. Vorrichtung nach Anspruch 5,
**dadurch gekennzeichnet, dass** der wenigstens eine Heizgas-Speicher (74) aus dem wenigstens einen Extraktionsgas-Speicher (54) mit CO₂ speisbar ist.

7. Vorrichtung nach einem der Ansprüche 1-6,
**dadurch gekennzeichnet, dass** wenigstens eine Gasgemisch-Förderanordnung (16, 18) zum Fördern von Luft durch den wenigstens einen Extraktionsreaktor (12, 14) im Adsorptionsbetrieb vorgesehen ist.

8. Vorrichtung nach einem der Ansprüche 1-7,
**dadurch gekennzeichnet,**
**dass** wenigstens eine Extraktionsreaktor-Entleerpumpe (42) zum Abpumpen von Luft, vorzugsweise zur Umgebung, aus dem wenigstens einen Extraktionsreaktor (12, 14) in einem Gasgemisch-Abpumpbetrieb oder/und zum Abpumpen von CO₂ aus dem wenigstens einen Extraktionsreaktor (12, 14) in den Extraktionsgas-Speicher (54) im Desorptionsbetrieb vorgesehen ist, oder/und
**dass** wenigstens eine Extraktionsgas-Wärmetauscheranordnung (86) vorgesehen ist zur Übertragung von in dem im Desorptionsbetrieb zu dem wenigstens einen Extraktionsgas-Speicher (54) geleiteten CO₂ transportierter Wärme auf ein Wärme aufnehmendes Medium.

9. Vorrichtung nach einem der Ansprüche 1-8,
**dadurch gekennzeichnet, dass** eine Mehrzahl von Extraktionsreaktoren (12, 14) vorgesehen ist,
vorzugsweise wobei dann, wenn ein Teil der Extraktionsreaktoren (12, 14) im Desorptionsbetrieb zu betreiben ist, ein Teil der Extraktionsreaktoren (12, 14) im Adsorptionsbetrieb betreibbar ist oder/und ein Teil der Extraktionsreaktoren (12, 14) im Heizbetrieb betreibbar ist.

10. Vorrichtung nach Anspruch 9, sofern auf Anspruch 4 rückbezogen,
**dadurch gekennzeichnet, dass** die Heizanordnung (56) dazu ausgebildet ist, das Heizgas nur dem im Heizbetrieb betriebenen Teil der Extraktionsreaktoren (12, 14) zuzuführen.

11. Vorrichtung nach Anspruch 9 oder 10, sofern auf Anspruch 8 rückbezogen, **dadurch gekennzeichnet, dass** das Wärme aufnehmende Medium das dem im Heizbetrieb betriebenen Teil der Extraktionsreaktoren (12, 14) zugeführte Heizgas umfasst.

12. Verfahren zum Extrahieren von CO₂ aus Luft, vorzugsweise vermittels einer Vorrichtung nach einem der Ansprüche 1-11, umfassend die Maßnahmen:
a) in einem Adsorptionsbetrieb, Fördern von Luft (L) durch wenigstens einen Extraktionsreaktor (12, 14) und Adsorbieren von CO₂ an einer Adsorptionsoberfläche (33) des wenigstens einen Extraktionsreaktors (12, 14),
b) in einem auf den Adsorptionsbetrieb folgenden Heizbetrieb, Erwärmen des wenigstens einen Extraktionsreaktors (12, 14) wenigstens im Bereich seiner Adsorptionsoberfläche auf eine über einer Extraktionsgas-Desorptionstemperatur liegende Temperatur,
c) in einem auf den Heizbetrieb folgenden Desorptionsbetrieb, Leiten von von dem wenigstens einen Extraktionsreaktor (12, 14) desorbiertem CO₂ zu wenigstens einem Extraktionsgas-Speicher (54).

13. Verfahren nach Anspruch 12,
**dadurch gekennzeichnet, dass** nach Beenden des Adsorptionsbetriebs und vor Beginn des Heizbetriebs in einem Gasgemisch-Abpumpbetrieb in dem wenigstens einen Extraktionsreaktor (12, 14) enthaltene Luft abgepumpt wird.

14. Verfahren nach Anspruch 12 oder 13,
**dadurch gekennzeichnet, dass** eine Mehrzahl von Extraktionsreaktoren (12, 14) verwendet wird, und dass dann, wenn ein Teil der Extraktionsreaktoren (12, 14) im Adsorptionsbetrieb betrieben wird, ein Teil der Extraktionsreaktoren (12, 14) im Adsorptionsbetrieb betrieben wird oder/und ein Teil der Extraktionsreaktoren (12, 14) im Heizbetrieb betrieben wird.

15. Verfahren nach Anspruch 14,
**dadurch gekennzeichnet, dass** dem von dem im Desorptionsbetrieb betriebenen Teil der Extraktionsreaktoren (12, 14) zu dem wenigstens einen Extraktionsgas-Speicher (54) geleiteten CO₂ Wärme zur Erwärmung des im Heizbetrieb betriebenen Teils der Extraktionsreaktoren (12, 14) entzogen wird.
